# EUROPEAN PATENT APPLICATION

(11) **EP 3 024 246 A1**
(43) Date of publication of application: **25.05.2016**
(21) Application number: 14193789.6
(22) Date of filing: 19.11.2014
(51) Int. Cl.: H04N 21/45, H04N 21/482

(54) **System and method for configuring graphical user interface based on user's behavior**

(71) Applicant: Advanced Digital Broadcast S.A., 1292 Geneva (CH)
(72) Inventor: Ptasznik, Dariusz, 65-119 Zielona Gora (PL)
(74) Representative: Blonski, Pawel

(57) **Abstract**

An object of the present invention is method for configuring graphical user interface of a television signal receiver based on user's behavior the method comprising the steps of: monitoring users activity with respect to watched television channels and programs within predefined time windows; storing, as a restoration point, the activity data together with information denoting time and day of week for each time window; obtaining a request to display a restoration point; determining day of the week and time of the request; finding at least one restoration point recorded at the same day of the week and time of the request; outputting a graphical user interface data comprising channels list that were recorded as activity data of the said restoration point.

## Description

The present invention relates to a system and method for configuring graphical user interface based on user's behavior. In particular the present invention relates to monitoring user's use of a television signal receiving equipment and modifying graphical user interface according to results of such monitoring.

Prior art defines so called favorite channels wherein a user defined a subset of channels that are accessible via a separate list and tuning sequence.

It would be advantageous to define a more flexible system that would not be based on explicit creation of favorite channels list but rather adapt graphical user interface, related to channels selection, based on user's behavior.

A publication of EP1377049 (B1) entitled "User interface for television schedule system" discloses a method for allowing a user to select favorite channels in an electronic program guide, the method comprising: providing a display of a plurality of cells representing a corresponding plurality of channels available for viewing by the user, wherein each cell comprises a channel number and a program service name for a particular channel of the plurality of channels; allowing the user to use the display to select a channel among the plurality of channels; changing a status of said selected channel to that of a favorite channel in response to the user selection; displaying in cells corresponding to the favorite channels a visual indication that the selected channels are favorite channels; and providing program guide information for the subset of channels having said favorite status in response to a user indication to view the program guide information.

The aim of the development of the present invention is an improved and automatic method and apparatus for configuring graphical user interface based on user's behavior.

### SUMMARY AND OBJECTS OF THE PRESENT INVENTION

An object of the present invention is method for configuring graphical user interface of a television signal receiver based on user's behavior the method comprising the steps of: monitoring users activity with respect to watched television channels and programs within predefined time windows; storing, as a restoration point, the activity data together with information denoting time and day of week for each time window; obtaining a request to display a restoration point; determining day of the week and time of the request; finding at least one restoration point recorded at the same day of the week and time of the request; outputting a graphical user interface data comprising channels list that were recorded as activity data of the said restoration point.

Preferably, the method comprises the step of allowing user navigation within said channels list and accepting user's request to display one of said channels.

Preferably, the activity data comprise channel identifier, program identifier, program name, program genre, program information and program rating.

Preferably, each program identifier is associated with a time value denoting duration when said program is output by the television receiver.

Another object of the present invention is a computer program comprising program code means for performing all the steps of the computer-implemented method according to the present invention when said program is run on a computer.

Another object of the present invention is a computer readable medium storing computer-executable instructions performing all the steps of the computer-implemented method according to the present invention when executed on a computer.

These and other objects of the invention presented herein, are accomplished by providing a system and method for configuring graphical user interface based on user's behavior. Further details and features of the present invention, its nature and various advantages will become more apparent from the following detailed description of the preferred embodiments shown in a drawing, in which:
Fig. 1 presents a diagram of the system according to the present invention;
Figs. 2A-C presents a diagram of the method according to the present invention;
Fig. 3 presents a general overview of restoration points stored in memory of the present system;
Fig. 4 shows restoration point data in more details;
Fig. 5A-B present examples of stored supplemental data;
Fig. 6 presents a method of using aforementioned restoration points in graphical user interface;
Fig. 7A-E present example of GUI presenting restoration point(s) data in different GUI states.

### NOTATION AND NOMENCLATURE

Some portions of the detailed description which follows are presented in terms of data processing procedures, steps or other symbolic representations of operations on data bits that can be performed on computer memory. Therefore, a computer executes such logical steps thus requiring physical manipulations of physical quantities.

Usually these quantities take the form of electrical or magnetic signals capable of being stored, transferred, combined, compared, and otherwise manipulated in a computer system. For reasons of common usage, these signals are referred to as bits, packets, messages, values, elements, symbols, characters, terms, numbers, or the like.

Additionally, all of these and similar terms are to be associated with the appropriate physical quantities and are merely convenient labels applied to these quantities. Terms such as "processing" or "creating" or "transferring" or "executing" or "determining" or "detecting" or "obtaining" or "selecting" or "calculating" or "generating" or the like, refer to the action and processes of a computer system that manipulates and transforms data represented as physical (electronic) quantities within the computer's registers and memories into other data similarly represented as physical quantities within the memories or registers or other such information storage.

A computer-readable (storage) medium, such as referred to herein, typically may be non-transitory and/or comprise a non-transitory device. In this context, a non-transitory storage medium may include a device that may be tangible, meaning that the device has a concrete physical form, although the device may change its physical state. Thus, for example, non-transitory refers to a device remaining tangible despite a change in state.

### DESCRIPTION OF EMBODIMENTS

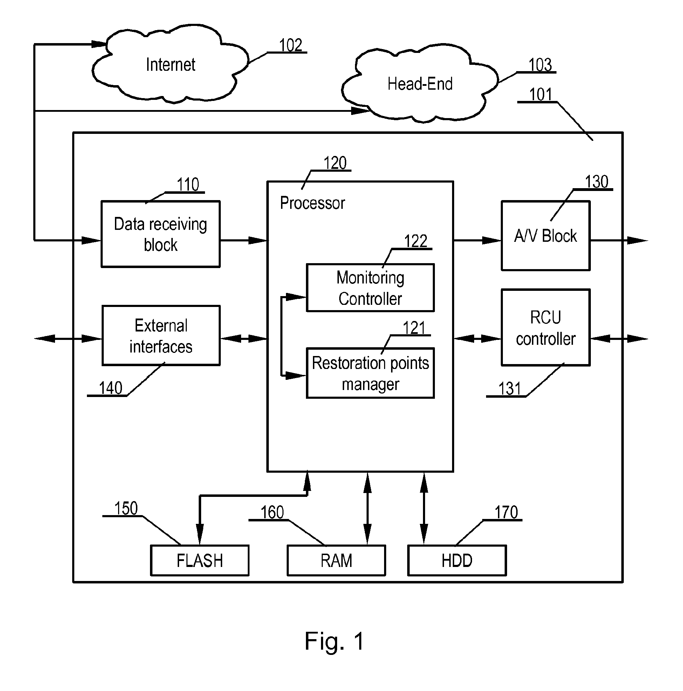

Fig. 1 presents a diagram of the system according to the present invention. The system is a decoder of digital television 101.

The decoder of digital television 101, for which the solution according to the presented technical concept may be applied, is divided into many functional modules, while its simplified version was shown in Fig. 1, as mentioned above, to avoid an overly complicated block diagram. It should be noted however, that the method may be applied in any device capable of television or audio/video content data reception and output of such data to a display, which may be internal or external.

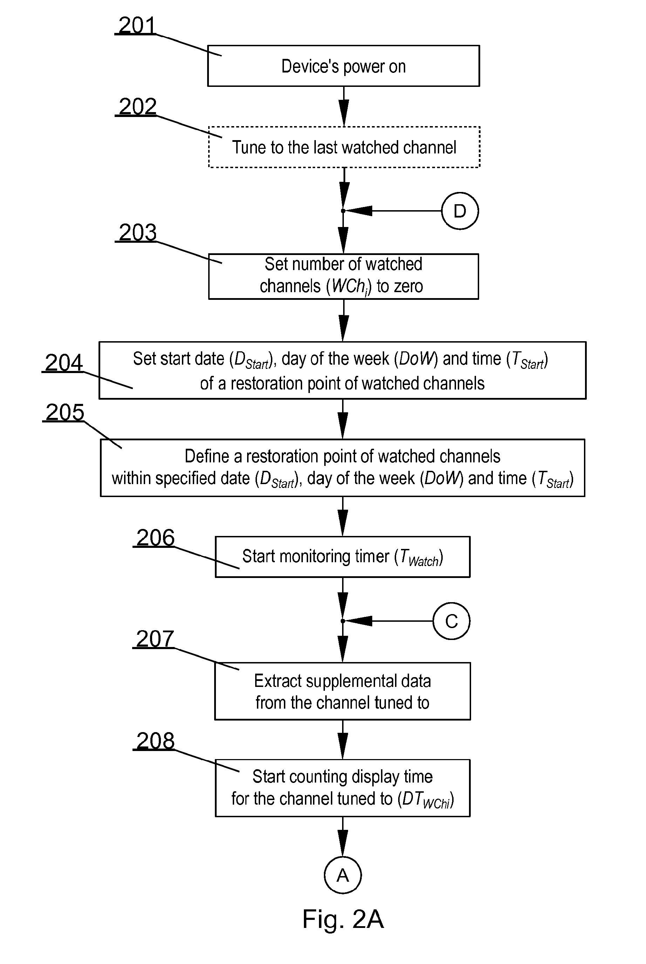

The most important module of the decoder 101 is a processor 120, which comprises a monitoring controller 122 for monitoring user's behavior at different times of day/week and within different time windows. Additionally, according to the presented architecture of the system, the processor 120 includes a restoration points manager 121 responsible for aggregating data on user's behavior and storing appropriate information according to the method of the present invention as shown in Figs. 2A-C.

In another example of embodiment, the blocks 121, 122 and 123 can be separate modules present outside the processor 120.

There is signal from data reception block 110, in the decoder 101, connected to the processor 120. Such data may comprise a television data stream received from a head-end facility 103, for example an MPEG stream, which is hereby referenced for exemplary purposes only and therefore other audio/video data coding and transmission standards may be used. Some of the applications run on the decoder may be downloaded from the source signal received by the data reception block 110. Such applications may include software implementing all steps of the method according to the presented concept.

Other data may include content downloaded from the Internet 102 or a local computer network. A head-end may provide content by means of for example a cable, satellite, terrestrial or Internet protocol data communication link. The head-end facility 103 typically includes a program guide database for storing program guide information (e.g., television program listings data, program-related information, service listings data, service-related information, pay-per-view ordering information, television program promotional information, etc.).

Information defining scheduled content items and information defining unscheduled content items will typically be received from the head-end facility 103 and/or the Internet 102.

Certain program guide features, such as pay program purchasing, the purchasing of products or services, and data collection functions, may require that viewer's television decoder 101 transmit data to head-end 103 over communications paths. If desired, such data may be transmitted over telephone lines or other separate communications paths. Such features may include the search query transmission for selecting a given television content.

The block A/V 130 and the remote control unit block 131 allow to transmit the output A/V signal to a display and communicate with external control devices, for example a remote control unit.

Additionally, the processor 120 has a possibility of bi-directional exchange of data through external interfaces 140. Such external interfaces are, for example, wireless network connections, external memories, home networking communication links or the like.

The digital television decoder 101 comprises also several types of memory, which are bi-directionally connected to the processor 120. These are the non-volatile, non-transitory memory (for example, of FLASH type 150) and operational RAM memory 160. There are programs, for controlling the operation of the digital television decoder 101, stored in these memories. The Hard Disk memory 170 is typically utilized as a storage space for viewer's digital television recordings.

One or more programmed software applications, herein referred to as applications, are executed by utilizing the computing resources in the decoder 101. Applications stored in flash memory 150 or RAM 160 are executed by processor 120. Data, for example programming schedule information, required as input by an application is stored in HDD 170, RAM 160 or flash memory 150 and read by processor 120 as needed during the course of the application's execution. An application referred to as program guide is also resident in decoder's memories. Additionally applications may store downloaded data or output data, for example data defining viewer's behavior.

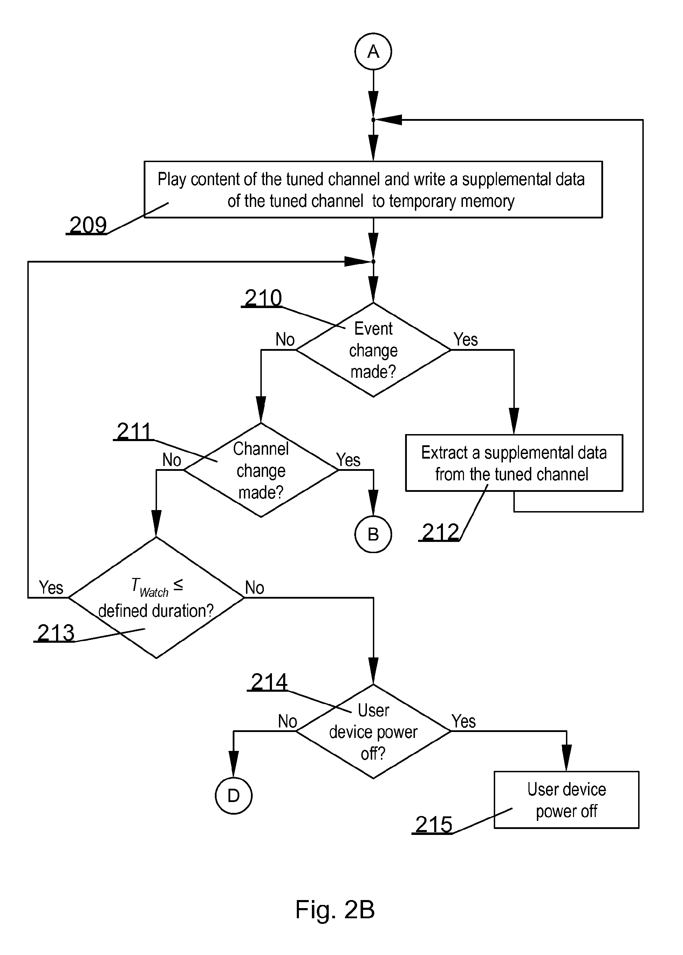

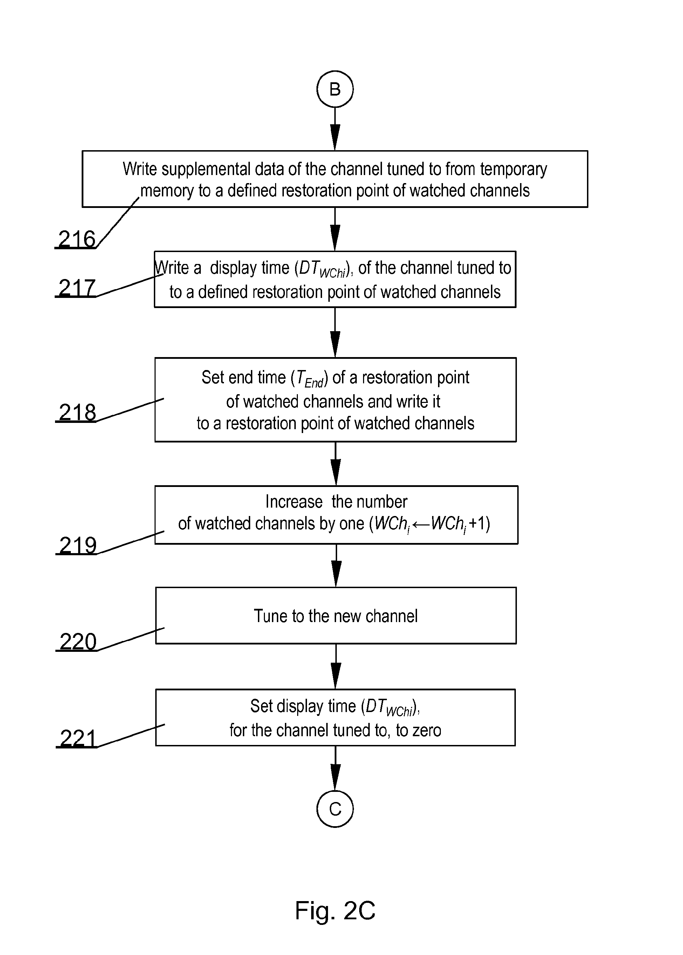

Fig. 2 presents a diagram of the method according to the present invention. The method starts at step 201 from powering on a television signal reception device. Subsequently, at step 202, there may optionally be executed tuning of the receiver to a last channel tuned to prior to switching of the receiver off.

Next, at steps 203-205, a new restoration point record is created in memory. The number of watched channels is set to zero 203 and the restoration point is associated with current day and time 204.

Subsequently, at step 206, a timer is started that will related to a monitoring window. Such window may be user defined for example two or four hours or it may be a default value.

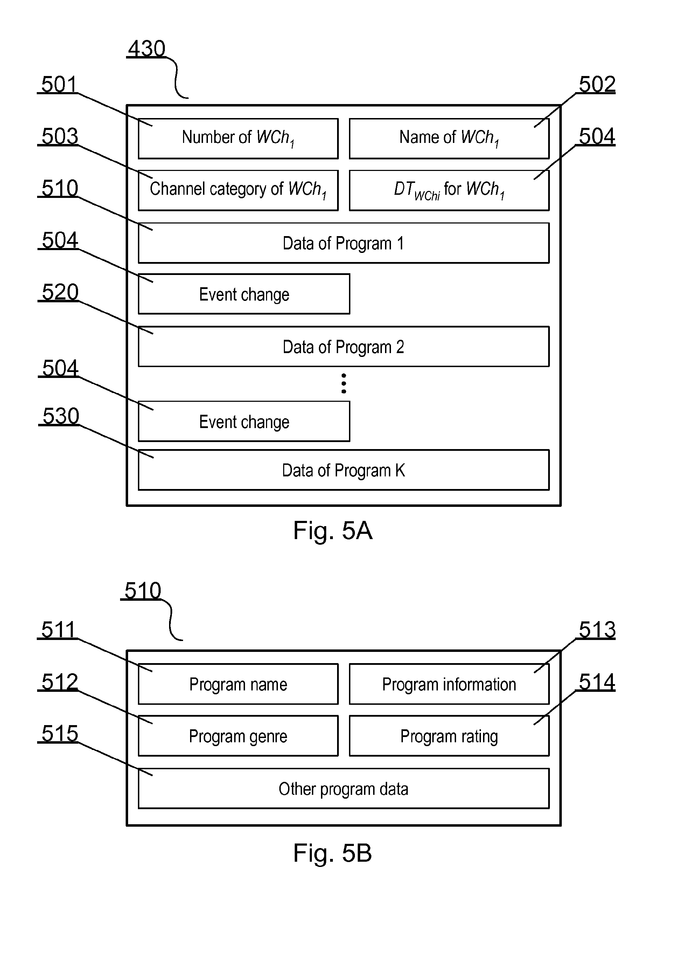

Further, at step 207, the system extracts supplemental data from the tuned channel. The supplemental data have been presented in an example as Fig. 5B wherein program name 511, program genre 512, program information 513 and program rating 514 are extracted. Other data 515 may also be present. This information may be available as DVB-SI data in Event Information Table(s).

Subsequently, there is executed a timer 208 for counting display time of the channel tuned to. This allows to know how much time a user has spent watching a given channel/event. The watching action is to be understood as the time such a program is output by the television receiver on its audio/video output i.e. presentation of the audio/video data.

The current event is played back 209 until the event finishes or the user chooses a different channel 210. In case the event finishes, at step 212 the supplemental data of the now current even are extracted, as previously explained. In case a channel is not changed 211 the system verifies whether the watching time is lower than the watching window duration 213. In case the watching window duration is not exceeded, the system returns to monitoring event/channel changes. Otherwise, the restoration point is finalized with the collected list of events and channels information for this particular date, day of the week and time window. Subsequently, a new watching window starts at step 203.

In case channel has changed together with the event change, the system proceeds to step 216 where supplemental data, of the channel tuned to, is transferred from temporary memory to a defined restoration point of watched channels/events. Subsequently, at step 217, there is written a display time, of the channel tuned to, to a defined restoration point of watched channels. Next, at step 218, there is set an end time of a restoration point of watched channels and subsequently written to a restoration point of watched channels and the number of watched channels is increased by one 219.

Subsequently, the user's receive tunes to 220 the requested channel and there is set 221 the display time, of the channel tuned to, to zero.

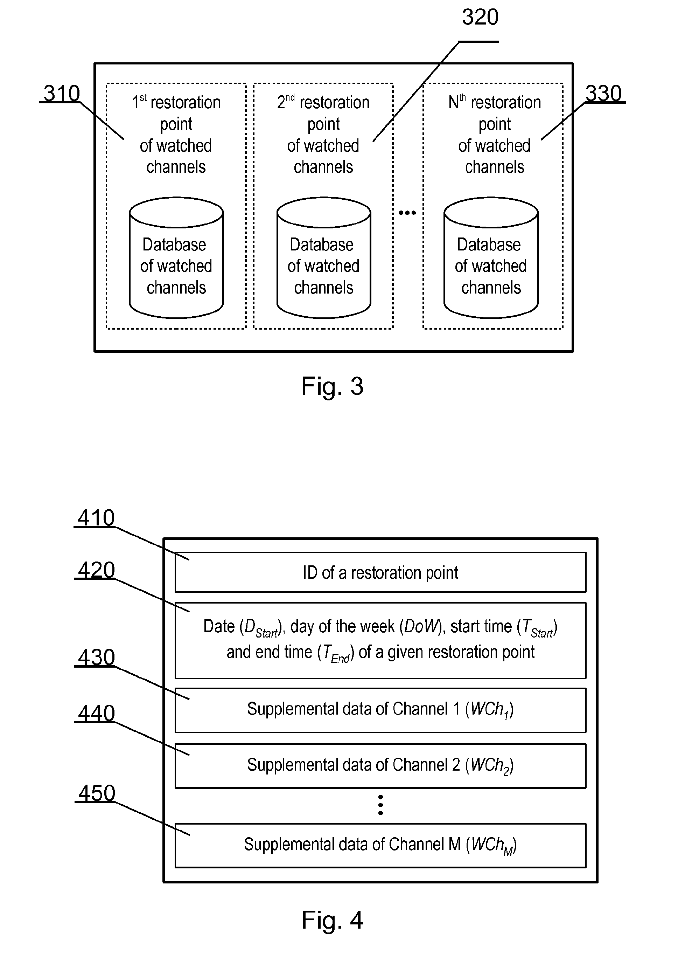

Fig. 3 presents a general overview of restoration points stored in memory of the present system. Such memory or memory area stores at least one restoration point 310, 320, 330 comprising information regarding at least one channel, at least one event and timing information such as recording time (date, day of the week, hour, minute), duration.

Fig. 4 shows restoration point data in more details. In particular such restoration point comprises a unique identifier 410 as well as Date (D_{Start}), day of the week (DoW), start time (T_{Start}) and end time (T_{End}) 420 of the given restoration point. Further, each restoration point comprises at least one set of 430, 440, 450 supplemental data of a channel. These data may be stored as tabular data wherein each row of a table comprises information on one event on a given television channel.

The supplemental data 430, 440, 450 is shown in more details in Fig. 5A. Each such set of supplemental data, for one channel, may comprise channel number 501 (number on the user's list), channel name 502, channel category 503 and duration of watching 504. In addition, the supplemental data, for one channel, may comprise data of each event 510 watched on this channel within a given time window. Details of such event 510, 520, 530 have been depicted in Fig. 5B. Optionally, a separate field of event change 504 may be present. This data field may denote event change time and/or event watching duration.

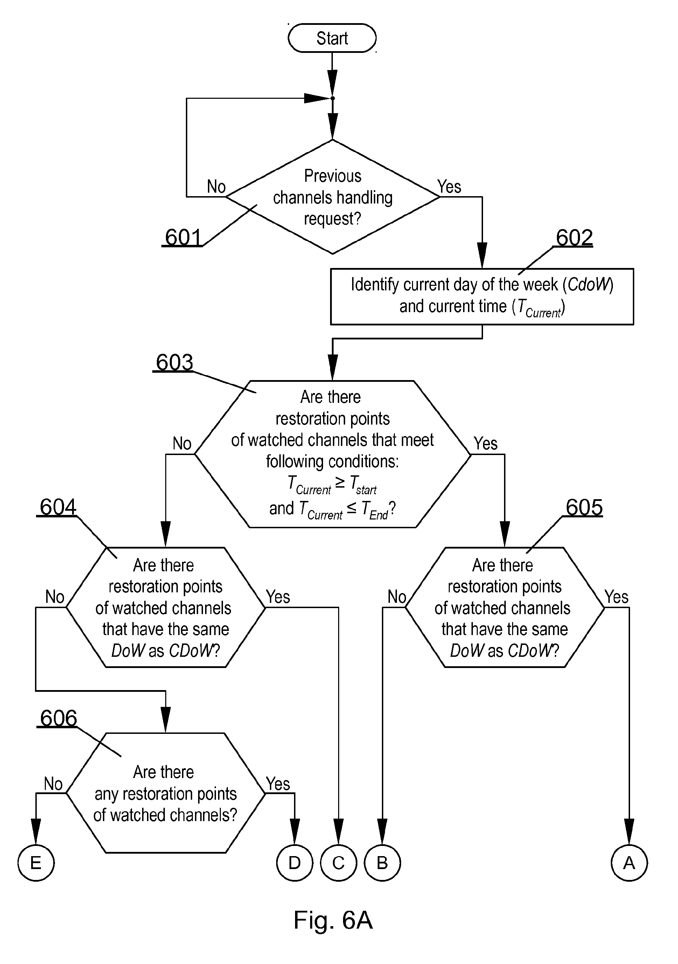

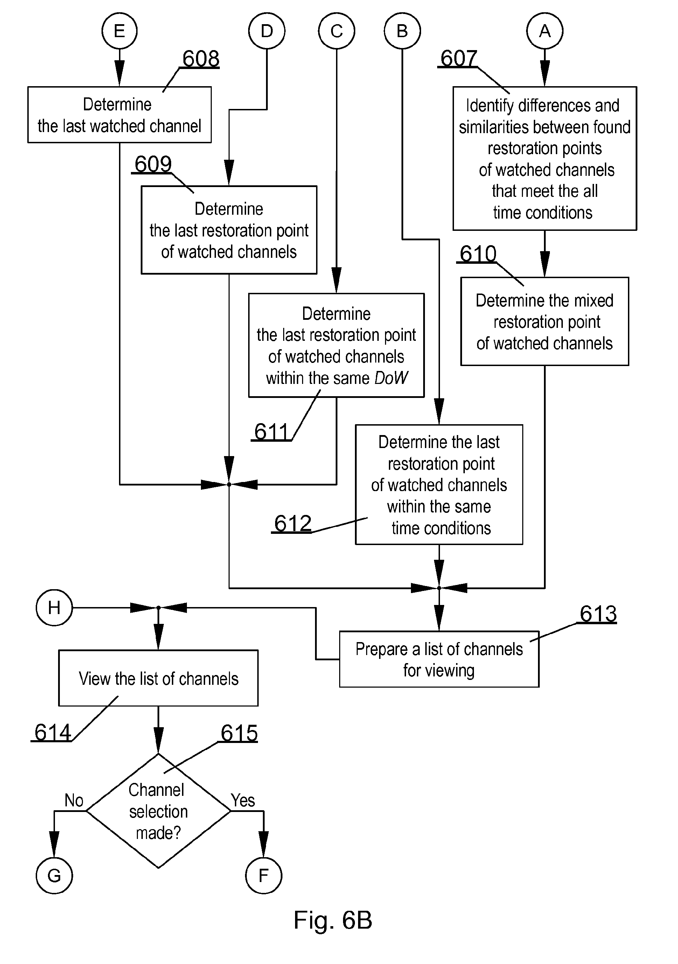

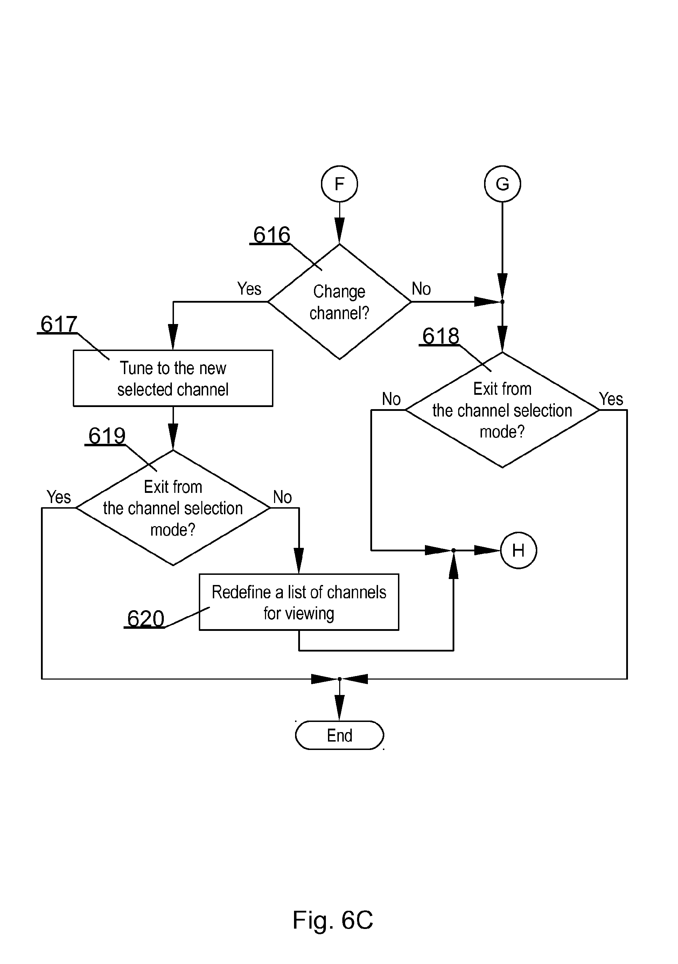

Fig. 6 presents a method of using aforementioned restoration points in graphical user interface. A user may invoke 601 the system, for example by means of a remote controller 131. After starting the method, at step 602, there is determined current day of the week and current time in order to check 603 whether there are restoration points of watched channels that meet the following conditions: T_{Current} ≥ Tₛₜₐᵣₜ and T_{Current} ≤ Tend.

In case there are such restoration points, at step 605 it is verified whether the found restoration points meet the other criterion of day of the week being the same as present day of the week. In case there are more than one restoration points meeting the criteria, at step 607 there are identified differences and similarities between the found restoration points. This finally leads to determining a mixed restoration point 610 of watched channels from the aforementioned more than one restoration points.

Next, on this basis there may be prepared 613 a list of channels for viewing, which is output for viewing at step 614, where a user's input is awaited 615.

In case there are not any restoration points meeting the criteria of step 603 there is omitted the condition of time of day and only the condition of day of the week is applied at step 604. In case some restoration points meet this criterion, these points will be utilized at step 611.

In case there are not any restoration points meeting the criteria of step 603 and step 604 any existing restoration point may be processed 609.

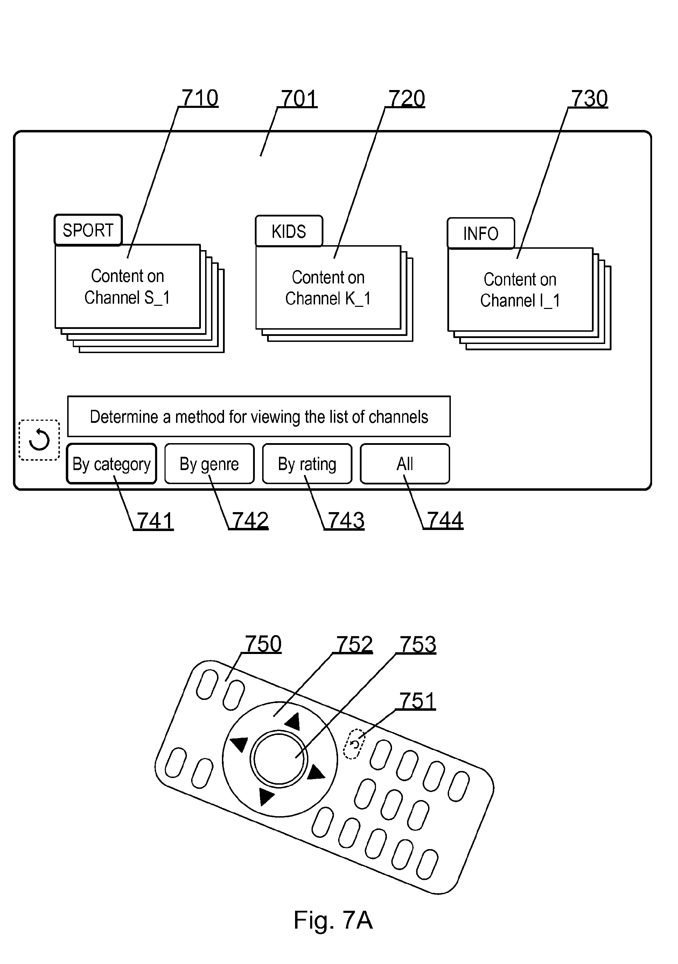

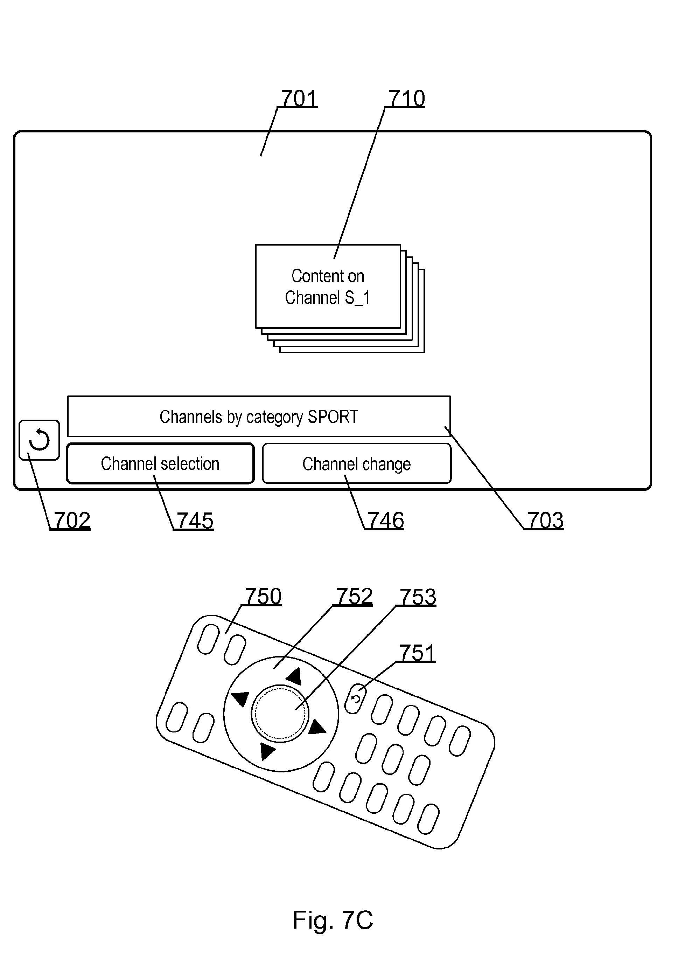

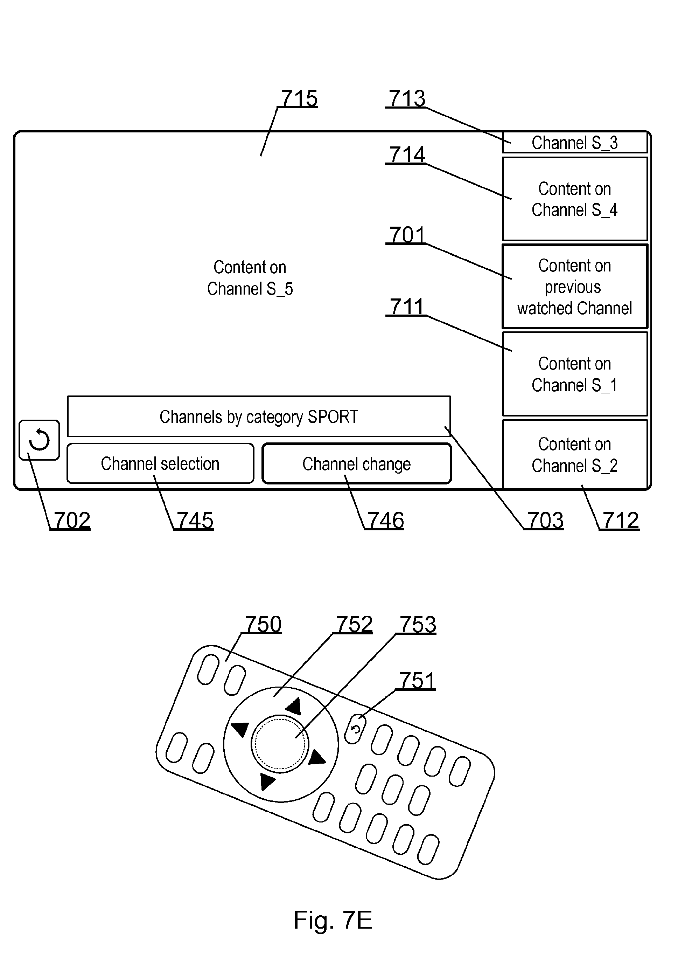

Fig. 7A presents an example of GUI presenting restoration point(s) data. The user interface 701 may be invoked by the user to present content on selected channel wherein such content is grouped according to selected option 741, 742, 743, 744. These exemplary options are grouping by channel category 741, or by program genre 742, or by program rating 743 or by presenting one group of all channels 744.

The aforementioned options may be invoked using remote controller's 750 buttons 752, 753 and closed using a back button 751.

As shown in Fig. 7A the selected grouping is by channel category and there are three channel categories presented 710, 720 and 730.

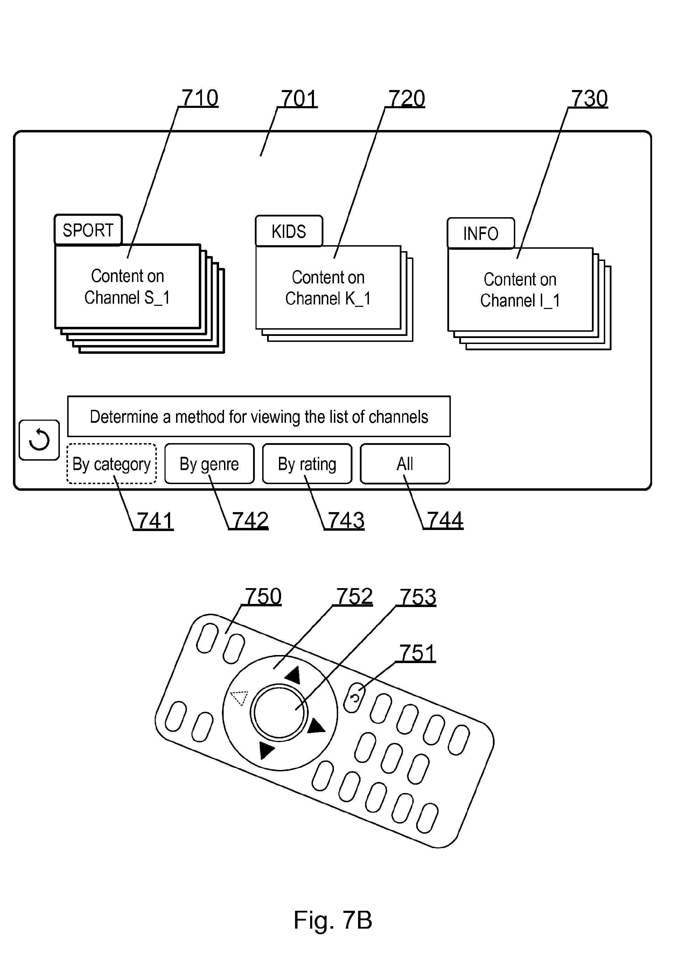

In Fig. 7B the user navigates to the displayed content categories 710, 720 and 730 and highlights the sport category 710. This category may then be selected and remain displayed as shown in Fog. 7C for selection 745 or channel browsing 746.

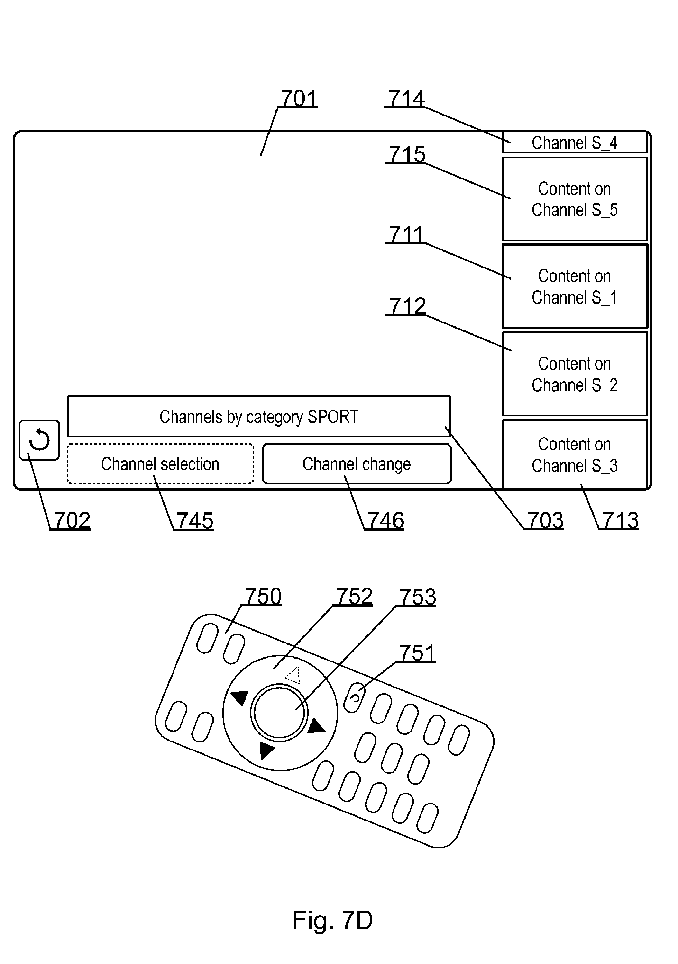

In case the user selects to change channel 746 the menu of Fig. 7D may be displayed wherein after a selection of a group of channels a list of these channels is provided as depicted. A user may then scroll through the list in order to select a channel and event/program of interest as the channels have live or still picture previews 711-715.

The present invention allows for easy access to preferred content. The access is fast and intuitive. Therefore, the invention provides a useful, concrete and tangible result.

As explained, the present invention relates to television receivers and monitoring user's activity with such devices in order to appropriately configure graphical user interface. The system monitors and processes activity data and hence the machine or transformation test is fulfilled and that the idea is not abstract.

It can be easily recognized, by one skilled in the art, that the aforementioned method for configuring graphical user interface based on user's behavior may be performed and/or controlled by one or more computer programs. Such computer programs are typically executed by utilizing the computing resources in a computing device. Applications are stored on a non-transitory medium. An example of a non-transitory medium is a non-volatile memory, for example a flash memory or while an example of a volatile memory is RAM. The computer instructions are executed by a processor. These memories are exemplary recording media for storing computer programs comprising computer-executable instructions performing all the steps of the computer-implemented method according the technical concept presented herein.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the technical concept. The presented preferred embodiments are exemplary only, and are not exhaustive of the scope of the technical concept presented herein.

Accordingly, the scope of protection is not limited to the preferred embodiments described in the specification, but is only limited by the claims that follow.

## Claims

1. Method for configuring graphical user interface of a television signal receiver based on user's behavior the method being **characterized in that** it comprises the steps of:
• monitoring (203-221) users activity with respect to watched television channels and programs within predefined time windows;
• storing (203-221), as a restoration point, the activity data together with information denoting time and day of week for each time window;
• obtaining a request to display a restoration point;
• determining day of the week and time of the request;
• finding at least one restoration point recorded at the same day of the week and time of the request;
• outputting a graphical user interface data comprising channels list that were recorded as activity data of the said restoration point.

2. The method according to claim 1 **characterized in that** it further comprises the step of allowing user navigation within said channels list and accepting user's request to display one of said channels.

3. The method according to claim 1 **characterized in that** the activity data comprise channel identifier, program identifier, program name (511), program genre (512), program information (513) and program rating (514).

4. The method according to claim 3 **characterized in that** each program identifier is associated with a time value denoting duration when said program is output by the television receiver.

5. A computer program comprising program code means for performing all the steps of the computer-implemented method according to claim 1 when said program is run on a computer.

6. A computer readable medium storing computer-executable instructions performing all the steps of the computer-implemented method according to claim 1 when executed on a computer.
